# FASCICULE DE BREVET EUROPEEN

(11) **EP 3 365 590 B1**
(45) Date de publication et mention de la délivrance du brevet: **08.12.2021**
(21) Numéro de dépôt: 16795115.1
(22) Date de dépôt: 10.10.2016
(51) Int. Cl.: B32B 5/04, B32B 5/08, B32B 5/10, B32B 5/12, B32B 5/26, B32B 27/12, B29C 49/00, B32B 1/08, B32B 7/03, B29C 48/09, B29C 48/00, B29C 48/25, F16L 55/134, B29C 55/24, B29C 49/04

(54) **DISPOSITIF D'OBTURATION POUR RÉGLER LA PRESSION OU LE DÉBIT D'ÉCOULEMENT DANS UN TUBE, ET PROCÉDÉ DE FABRICATION D'UN TUBE**
ABDICHTUNGSVORRICHTUNG ZUR STEUERUNG DES DRUCKS ODER DURCHFLUSSES IN EINEM ROHR UND VERFAHREN ZUR HERSTELLUNG EINES ROHRES
SEALING DEVICE FOR CONTROLLING THE PRESSURE OR FLOW RATE IN A TUBE, AND METHOD FOR MANUFACTURING A TUBE

(30) Priorité: 19.10.2015 FR 1559933
(43) Date de publication de la demande: 29.08.2018
(73) Titulaire: Dyka SAS, 62140 Sainte Austreberthe (FR)
(72) Inventeur: DECAUDIN, Benoît, 62170 Sempy (FR)
(74) Mandataire: Arnold & Siedsma
(86) Numéro de dépôt international: PCT/FR2016/052613
(87) Numéro de publication internationale: WO 2017/068260

(56) Documents cités:
- EP-A1- 0 738 379
- WO-A1-97/06940
- WO-A1-2011/009630
- FR-A1- 2 856 456
- US-A- 5 702 109

## Description

La présente invention concerne un dispositif d'obturation pour obturer ou régler la pression ou le débit d'écoulement dans un tube, et un procédé de fabrication d'un tube en matière plastique à l'aide d'un tel dispositif d'obturation.

Le document EP0738379 décrit un dispositif d'obturation pour régler la pression ou le débit d'écoulement dans un tube, comprenant :
- un manchon tubulaire gonflable présentant un axe d'extension et délimitant une chambre interne, le manchon tubulaire gonflable étant flexible et déformable radialement entre une configuration de repos dans laquelle le manchon tubulaire gonflable présente un premier diamètre externe maximal et une configuration gonflée dans laquelle le manchon tubulaire gonflable présente un deuxième diamètre externe maximal supérieur au premier diamètre externe maximal,
- une entrée de fluide reliée fluidiquement à la chambre interne et destinée à être reliée à une source de fluide de gonflage, et
- une enveloppe de renfort disposée autour du manchon tubulaire gonflable et s'étendant coaxialement au manchon tubulaire gonflable, l'enveloppe de renfort comprenant une première couche de renforcement tubulaire et composée de fils de renforcement enroulés en hélice autour de la surface extérieure du manchon tubulaire gonflable selon un premier sens d'enroulement, et une deuxième couche de renforcement tubulaire et composée de fils de renforcement enroulés en hélice autour de la première couche de renforcement selon un deuxième sens d'enroulement inversé par rapport au premier sens d'enroulement.

Un tel dispositif d'obturation est plus particulièrement destiné à être utilisé pour la fabrication d'un tube en matière plastique bi-orienté. Un procédé de fabrication d'un tube en matière plastique bi-orienté, à l'aide d'un tel dispositif d'obturation, comprend notamment les étapes consistant à :
- extruder un tube en matière plastique,
- déplacer le tube extrudé longitudinalement selon une direction de déplacement,
- disposer le dispositif d'obturation et un élément d'obturation à l'intérieur du tube extrudé et à distance l'un de l'autre de manière à définir une zone de dilatation, le dispositif d'obturation étant disposé en aval de l'élément d'obturation par rapport à la direction de déplacement du tube extrudé,
- introduire un fluide de dilatation dans la zone de dilatation,
- introduire un fluide de gonflage dans la chambre interne du dispositif d'obturation de manière à déformer radialement le manchon tubulaire gonflable dans sa configuration gonflée,
- dilater diamétralement le tube extrudé par l'intermédiaire du fluide de dilatation retenu au moins en partie dans la zone de dilatation, et
- refroidir le tube dilaté diamétralement.

Au cours de la fabrication du tube en matière plastique bi-orienté, le dispositif d'obturation est soumis à d'importantes sollicitations mécaniques qui résultent du contact et du mouvement relatif entre le tube extrudé et le dispositif d'obturation. La présence de l'enveloppe de renfort permet de renforcer le dispositif d'obturation, et plus particulièrement de protéger le manchon tubulaire gonflable et d'éviter une rupture rapide de ce dernier.

En outre, la configuration en hélice des fils de renforcement de l'enveloppe de renfort évite un fluage vers l'extérieur de la matière constitutive du manchon tubulaire à travers les fils de renforcement, et donc évite la formation d'hernies à travers des interstices entre les fils de renforcement pouvant conduire à la rupture du manchon tubulaire. Une telle configuration en hélice permet ainsi de prolonger encore la durée de vie du dispositif d'obturation.

Néanmoins, un tel dispositif d'obturation présente une durée de vie de quelques heures, ce qui a un impact préjudiciable à la productivité de la ligne de fabrication, et donc sur les coûts de fabrication d'un tube en matière plastique bi-orienté.

FR2856456 A1 divulgue un dispositif gonflable pouvant obturer un puits de pétrole ou un oléoduc comportant des nappes hélicoïdales croisées de renfort.

US5702109A divulgue également un dispositif d'obturation gonflable du domaine de l'extraction pétrolière comportant des nappes de renfort hélicoïdales croisées enveloppées de fils de renfort longitudinaux, ces renforts étant en fibres d'aramide.

WO2011009630A1 divulgue également un obturateur gonflable renforcé de fils en UHMWPE et/ou en aramide.

La présente invention vise à remédier à ces inconvénients.

Le problème technique à la base de l'invention consiste donc à fournir un dispositif d'obturation qui présente une durée de vie allongée.

A cet effet, la présente invention concerne un dispositif d'obturation selon la revendication 1.

La présence de l'enveloppe de renfort externe permet d'augmenter la résistance mécanique à la traction du dispositif d'obturation, et ainsi de prolonger la durée de vie du dispositif d'obturation.

En outre, de manière surprenante, la demanderesse a constaté que le fait de composer l'enveloppe de renfort interne et/ou l'enveloppe de renfort externe à partir d'au moins deux types différents de fils de renforcement permet d'adapter les propriétés mécaniques de l'enveloppe de renfort interne et/ou de l'enveloppe de renfort externe d'une part afin d'augmenter encore la résistance mécanique du dispositif d'obturation, et donc d'augmenter encore la durée de vie du dispositif d'obturation, et d'autre part afin d'améliorer la stabilité du procédé de fabrication du tube bi-orienté, et ainsi la fiabilité du tube fabriqué.

Par conséquent, le dispositif d'obturation selon la présente invention permet d'améliorer la productivité de la ligne de fabrication, de diminuer les coûts de fabrication d'un tube en matière plastique bi-orienté, et également d'augmenter la fiabilité d'un tel tube.

Le dispositif d'obturation peut en outre présenter une ou plusieurs des caractéristiques suivantes, prises seules ou en combinaison.

Selon un mode de réalisation de l'invention, l'enveloppe de renfort interne et l'enveloppe de renfort externe présentent des compositions de fils de renforcement différentes. Par exemple, l'enveloppe de renfort interne est composée de fils de renforcement d'un premier matériau et de fils de renforcement d'un deuxième matériau, et l'enveloppe de renfort externe est composée de fils de renforcement du premier matériau et de fils de renforcement du deuxième matériau, les enveloppes de renfort interne et externe présentant des proportions de fils de renforcement du premier matériau et du deuxième matériau différentes. Alternativement, l'enveloppe de renfort interne pourrait être composée de fils de renforcement d'un matériau différent des fils de renforcement composant l'enveloppe de renfort externe.

Selon un mode de réalisation de l'invention, l'enveloppe de renfort interne et l'enveloppe de renfort externe présentent des compositions de fils de renforcement identiques. Par exemple, l'enveloppe de renfort interne est composée de fils de renforcement d'un premier matériau et de fils de renforcement d'un deuxième matériau, et l'enveloppe de renfort externe est composée de fils de renforcement du premier matériau et de fils de renforcement du deuxième matériau, les enveloppes de renfort interne et externe présentant sensiblement les mêmes proportions de fils de renforcement du premier matériau et du deuxième matériau, et par exemple chacune comporte sensiblement 50 % de fils de renforcement du premier matériau et 50 % de fils de renforcement du deuxième matériau.

Selon l'invention, la couche de renforcement externe est composée de fils de renforcement s'étendant sensiblement parallèlement, et avantageusement parallèlement, à l'axe d'extension du manchon tubulaire gonflable. La configuration particulière des fils de renforcement appartenant à l'enveloppe de renfort externe limite l'augmentation de la rigidité radiale du dispositif d'obturation découlant de la présence de l'enveloppe de renfort externe, ce qui assure une déformation diamétrale du manchon tubulaire gonflable sans nécessiter l'application d'une pression excessive dans la chambre interne et donc sans risque de rupture du manchon tubulaire gonflable. Une telle configuration des fils de renforcement permet ainsi de prolonger encore la durée de vie du dispositif d'obturation. Une telle configuration des fils de renforcement permet également d'améliorer encore la stabilité du procédé de fabrication du tube bi-orienté.

Selon un mode de réalisation de l'invention, l'enveloppe de renfort interne s'étend sensiblement coaxialement au manchon tubulaire gonflable.

Selon un mode de réalisation de l'invention, l'enveloppe de renfort externe s'étend sensiblement coaxialement au manchon tubulaire gonflable.

Selon un mode de réalisation de l'invention, l'enveloppe de renfort interne comprend en outre au moins :
- une troisième couche de renforcement interne tubulaire et composée de fils de renforcement enroulés en hélice autour de la deuxième couche de renforcement interne et autour de l'axe d'extension du manchon tubulaire gonflable selon le premier sens d'enroulement, et
- une quatrième couche de renforcement interne tubulaire et composée de fils de renforcement enroulés en hélice autour de la troisième couche de renforcement interne et autour l'axe d'extension du manchon tubulaire gonflable selon le deuxième sens d'enroulement.

Selon un mode de réalisation de l'invention, l'enveloppe de renfort externe comprend une pluralité de couches de renforcement externes s'étendant sensiblement coaxialement les unes par rapport aux autres, et par exemple deux couches de renforcement externes sensiblement coaxiales.

Selon un mode de réalisation de l'invention, chaque fil de renforcement appartenant à l'enveloppe de renfort interne s'étend selon un angle d'hélice compris entre 5 et 20° par rapport à l'axe d'extension du manchon tubulaire gonflable en configuration de repos.

Selon un mode de réalisation de l'invention, les fils de renforcement appartenant à l'enveloppe de renfort interne s'étendent selon un angle d'hélice sensiblement identique par rapport à l'axe d'extension du manchon tubulaire gonflable en configuration de repos.

Selon un mode de réalisation de l'invention, chaque fil de renforcement appartenant à l'enveloppe de renfort interne présente un module d'élasticité supérieur à 125 g/d, et de préférence supérieur ou égale à 500 g/d, et une élongation à la rupture maximale inférieure ou égale à 10 %, de préférence inférieure ou égale à 5 %. Le module d'élasticité et l'élongation à la rupture maximale sont déterminés selon la norme ISO 2062.

Selon l'invention, l'enveloppe de renfort interne est formée par des fils de renforcement en polyéthylène à très haut poids moléculaire, également nommé polyéthylène de masse molaire très élevée, (UHMWPE ou UHMwPE), et des fils de renforcement en polymère à cristaux liquides (LCP pour Liquid Crystal Polymer), tel qu'un polymère aromatique et notamment un polyester aromatique.

Selon un mode de réalisation de l'invention, l'enveloppe de renfort interne est formée par des fils de renforcement en UHMWPE, par exemple en DYNEEMA (marque déposée) ou en SPECTRA (marque déposée), et/ou des fils de renforcement en polymère à cristaux liquides, par exemple en VECTRA (marque déposée) ou en VECTRAN (marque déposée).

Selon un mode de réalisation de l'invention, l'enveloppe de renfort interne est formée par un mélange de 10 à 90 % de fils de renforcement en UHMWPE, par exemple en DYNEEMA, et de 90 à 10% de fils de renforcement en polymère à cristaux liquides, par exemple en VECTRAN, le pourcentage étant exprimé en nombre de fils de renforcement par rapport au nombre total de fils de renforcement formant l'enveloppe de renfort interne. Une telle composition de l'enveloppe de renfort interne permet d'augmenter la résistance mécanique à la traction de l'enveloppe de renfort interne, sans nuire à la déformation diamétrale du manchon tubulaire gonflable.

Selon un mode de réalisation de l'invention, l'enveloppe de renfort interne est formée par un mélange de 20 à 80 %, avantageusement de 40 à 60 %, et par exemple d'environ 50 %, de fils de renforcement en UHMWPE, et de 80 à 20 %, avantageusement de 60 à 40%, et par exemple d'environ 50%, de fils de renforcement en polymère à cristaux liquides.

Selon un mode de réalisation de l'invention, le dispositif d'obturation comprend en outre une enveloppe de renfort intermédiaire disposée autour de l'enveloppe de renfort interne et entre l'enveloppe de renfort interne et l'enveloppe de renfort externe, l'enveloppe de renfort intermédiaire s'étendant sensiblement coaxialement au manchon tubulaire gonflable, l'enveloppe de renfort intermédiaire comprenant au moins une couche de renforcement intermédiaire tubulaire et composée de fils de renforcement s'étendant sensiblement parallèlement à l'axe d'extension du manchon tubulaire gonflable. La présence de l'enveloppe de renfort intermédiaire permet, comme l'enveloppe de renfort externe, de prolonger la durée de vie du dispositif d'obturation.

Selon un mode de réalisation de l'invention, l'enveloppe de renfort intermédiaire comprend une pluralité de couches de renforcement intermédiaires s'étendant sensiblement coaxialement les unes par rapport aux autres, et par exemple quatre couches de renforcement intermédiaires.

Selon un mode de réalisation de l'invention, chaque fil de renforcement appartenant à l'enveloppe de renfort intermédiaire présente un module d'élasticité supérieur à 125 g/d et de préférence supérieur ou égale à 500 g/d, et une élongation à la rupture maximale inférieure ou égale à 10%, de préférence inférieure ou égale à 5%.

Selon un mode de réalisation de l'invention, l'enveloppe de renfort intermédiaire est formée, au moins en partie, par des fils de renforcement en polybenzoxal, par exemple en aramide, et/ou des fils de renforcement en polytétrafluoroéthylène (PTFE), par exemple en Téflon (marque déposé), et/ou des fils de renforcement en UHMWPE, et/ou des fils de renforcement en polymère à cristaux liquides.

Selon un mode de réalisation de l'invention, l'enveloppe de renfort intermédiaire est formée par des fils de renforcement en UHMWPE et/ou des fils de renforcement en polymère à cristaux liquides.

Selon un mode de réalisation de l'invention, l'enveloppe de renfort intermédiaire est formée par un mélange de 10 à 90 % de fils de renforcement en UHMWPE, par exemple en DYNEEMA, et de 90 à 10% de fils de renforcement en polymère à cristaux liquides, par exemple en VECTRAN, le pourcentage étant exprimé en nombre de fils de renforcement par rapport au nombre total de fils de renforcement formant l'enveloppe de renfort intermédiaire. Une telle composition de l'enveloppe de renfort intermédiaire permet d'augmenter la résistance mécanique à la traction de l'enveloppe de renfort interne, sans nuire à la déformation diamétrale du manchon tubulaire gonflable.

Selon un mode de réalisation de l'invention, l'enveloppe de renfort intermédiaire est formée par un mélange de 20 à 80 %, avantageusement de 40 à 60 %, et par exemple d'environ 50 %, de fils de renforcement en UHMWPE, et de 80 à 20%, avantageusement de 60 à 40%, et par exemple d'environ 50%, de fils de renforcement en polymère à cristaux liquides.

Selon un mode de réalisation de l'invention, chaque fil de renforcement appartenant à l'enveloppe de renfort externe présente un module d'élasticité supérieur à 125 g/d et de préférence supérieur ou égale à 500 g/d, et une élongation à la rupture maximale inférieure ou égale à 10%, de préférence inférieure ou égale à 5%.

Selon un mode de réalisation de l'invention, l'enveloppe de renfort externe est formée, au moins en partie, par des fils de renforcement en UHMWPE, et/ou des fils de renforcement en polymère à cristaux liquides, et/ou des fils de renforcement en polybenzoxal, et/ou des fils de renforcement en polytétrafluoroéthylène.

Selon un mode de réalisation de l'invention, les fils de renforcement appartenant à l'enveloppe de renfort externe sont formés en UHMWPE. Une telle composition de l'enveloppe de renfort externe permet de limiter, lors de la fabrication d'un tube bi-orienté, la friction entre le tube et le dispositif d'obturation du fait du coefficient de glissement élevé de l'UHMWPE. Ces dispositions permettent ainsi d'améliorer la stabilité du procédé de fabrication du tube bi-orienté, et ainsi la fiabilité du tube fabriqué. De plus, l'utilisation de l'UHMWPE pour réaliser l'enveloppe de renfort externe permet de limiter l'augmentation de la rigidité radiale du dispositif d'obturation liée à la présence de l'enveloppe de renfort externe.

Selon un mode de réalisation de l'invention, les fils de renforcement appartenant à l'enveloppe de renfort externe sont formés en DYNEEMA.

Selon un mode de réalisation de l'invention, chaque fil de renforcement en polymère à cristaux liquides appartenant à l'enveloppe de renfort interne et/ou à l'enveloppe de renfort intermédiaire présente une masse linéique comprise entre 25 et 3750 Denier, c'est-à-dire entre 25 et 3750 g/9000 m. Par exemple, chaque fil de renforcement en polymère à cristaux liquides appartenant à l'enveloppe de renfort interne et/ou à l'enveloppe de renfort intermédiaire présente une masse linéique comprise entre 1000 et 2000 Denier, et avantageusement entre 1400 et 1600 Denier, c'est-à-dire entre 1000 et 2000 g/9000 m, et avantageusement entre 1400 et 1600 g/9000 m.

Selon un mode de réalisation de l'invention, chaque fil de renforcement en polymère à cristaux liquides appartenant à l'enveloppe de renfort interne et/ou à l'enveloppe de renfort intermédiaire présente une masse linéique comprise entre 27 et 4160 Décitex, c'est-à-dire entre 27 et 4160 g/10000 m.

Selon un mode de réalisation de l'invention, chaque fil de renforcement en polymère à cristaux liquides appartenant à l'enveloppe de renfort interne et/ou à l'enveloppe de renfort intermédiaire présente un module d'élasticité supérieur à 525 g/d (grammes par denier), et par exemple supérieur à 600 g/d.

Selon un mode de réalisation de l'invention, chaque fil de renforcement en polymère à cristaux liquides appartenant à l'enveloppe de renfort interne et/ou à l'enveloppe de renfort intermédiaire présente une élongation à la rupture maximale comprise entre 2 et 3,3 %.

Selon un mode de réalisation de l'invention, chaque fil de renforcement en UHMWPE appartenant à l'enveloppe de renfort interne, et/ou à l'enveloppe de renfort intermédiaire et/ou à l'enveloppe de renfort externe présente une masse linéique comprise entre 130 et 4800 Denier, c'est-à-dire entre 130 et 4800 g/9000 m.

Selon un mode de réalisation de l'invention, chaque fil de renforcement en UHMWPE appartenant à l'enveloppe de renfort interne, et/ou à l'enveloppe de renfort intermédiaire et/ou à l'enveloppe de renfort externe présente une masse linéique comprise entre 144 et 5300 Décitex, c'est-à-dire entre 144 et 5300 10⁻⁷ Kg/m ou g/10000 m. Par exemple, chaque fil de renforcement en UHMWPE appartenant à l'enveloppe de renfort interne, et/ou à l'enveloppe de renfort intermédiaire et/ou à l'enveloppe de renfort externe présente une masse linéique comprise entre 1100 et 2640 Décitex, et avantageusement entre 1500 et 1800 Décitex, c'est-à-dire entre 1100 et 2640 10⁻⁷ Kg/m ou g/10000 m et avantageusement entre 1500 et 1800 10⁻⁷ Kg/m ou g/10000 m.

Selon un mode de réalisation de l'invention, chaque fil de renforcement en UHMWPE appartenant à l'enveloppe de renfort interne, et/ou à l'enveloppe de renfort intermédiaire et/ou à l'enveloppe de renfort externe présente une masse linéique d'environ 1760 Décitex, c'est-à-dire entre 1760 10⁻⁷ Kg/m ou g/10000 m, et est par exemple en DYNEEMA 1760 dtex.

Selon un mode de réalisation de l'invention, chaque fil de renforcement en UHMWPE appartenant à l'enveloppe de renfort interne, et/ou à l'enveloppe de renfort intermédiaire et/ou à l'enveloppe de renfort externe présente un module d'élasticité supérieur à 720 g/d (grammes par denier), et par exemple supérieur à 1350 g/d.

Selon un mode de réalisation de l'invention, chaque fil de renforcement en UHMWPE appartenant à l'enveloppe de renfort interne, et/ou à l'enveloppe de renfort intermédiaire et/ou à l'enveloppe de renfort externe présente une élongation à la rupture maximale comprise entre 2,7 et 3,5 %.

Selon un mode de réalisation de l'invention, l'entrée de fluide est destinée à être reliée fluidiquement à un conduit d'alimentation relié à la source de fluide de gonflage.

Selon un mode de réalisation de l'invention, le dispositif d'obturation comprend en outre un premier et un deuxième éléments de support sur lesquels sont fixées de manière étanche respectivement une première et une deuxième portions d'extrémité du manchon tubulaire gonflable.

Selon un mode de réalisation de l'invention, chaque fil de renforcement appartenant aux enveloppes de renfort interne, intermédiaire et externe relie les premier et deuxième éléments de support.

Selon un mode de réalisation de l'invention, le manchon tubulaire gonflable est en matériau étanche.

Selon un mode de réalisation de l'invention, le manchon tubulaire gonflable est de section circulaire.

Selon un mode de réalisation de l'invention, l'enveloppe de renfort interne, et/ou l'enveloppe de renfort intermédiaire et/ou l'enveloppe de renfort externe s'étend sur sensiblement toute la longueur du manchon tubulaire gonflable.

La présente invention concerne en outre un procédé de fabrication d'un tube en matière plastique selon la revendication 12, par exemple un tube en matière plastique bi-orienté, comprenant les étapes consistant à :
- extruder un tube en matière plastique,
- déplacer le tube extrudé longitudinalement selon une direction de déplacement,
- disposer un dispositif d'obturation selon l'invention et un élément d'obturation à l'intérieur du tube extrudé et à distance l'un de l'autre de manière à définir une zone de dilatation, le dispositif d'obturation étant disposé en aval de l'élément d'obturation par rapport à la direction de déplacement du tube extrudé,
- introduire un fluide de dilatation dans la zone de dilatation,
- introduire un fluide de gonflage dans la chambre interne du dispositif d'obturation de manière à déformer radialement le manchon tubulaire gonflable dans sa configuration gonflée,
- dilater diamétralement le tube extrudé par l'intermédiaire du fluide de dilatation retenu au moins en partie dans la zone de dilatation, et
- refroidir le tube dilaté diamétralement.

Un tel procédé de fabrication, et notamment l'utilisation d'un dispositif d'obturation selon l'invention pour la fabrication d'un tube en matière plastique bi-orienté, permet de diminuer le nombre d'arrêts de la ligne de fabrication liés aux remplacements du dispositif d'obturation, et également de réduire les pertes de matière. Il en résulte une diminution importante des coûts de fabrication du tube.

Selon un mode de mise en œuvre du procédé de fabrication, ce dernier comprend en outre une étape consistant à étirer axialement le tube extrudé, l'étape d'étirage pouvant être réalisée avant ou après l'étape de dilatation.

Selon un mode de mise en œuvre du procédé de fabrication, ce dernier comprend en outre une étape consistant à maintenir la pression dans la zone de dilation dans une plage de pression prédéterminée.

La présente invention concerne également une utilisation d'un dispositif d'obturation selon l'invention pour la fabrication d'un tube en matière plastique, et par exemple d'un tube en matière plastique bi-orienté.

De toute façon l'invention sera bien comprise à l'aide de la description qui suit en référence au dessin schématique annexé représentant, à titre d'exemple non limitatif, une forme d'exécution de ce dispositif d'obturation.
Figure 1 est une vue schématique de côté d'un dispositif d'obturation selon la présente invention, dans une configuration de repos.
Figure 2 est une schématique de côté du dispositif d'obturation de la figure 1, dans une configuration gonflée.
Figure 3 est une vue partielle en coupe du dispositif d'obturation de la figure 1.
Figure 4 est une vue schématique en perspective du dispositif d'obturation de la figure 1, montrant les différentes couches de renforcement constitutives des enveloppes de renfort interne, intermédiaire et externe du dispositif d'obturation.
Figure 5 est une vue schématique d'une ligne de fabrication d'un tube en matière plastique bi-orienté.

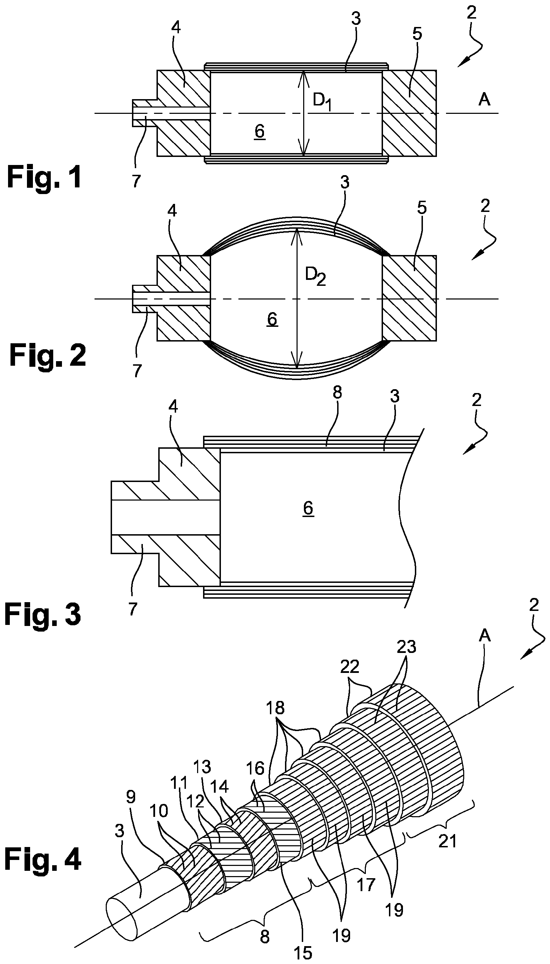

Les figures 1 à 4 représentent un dispositif d'obturation 2 configuré pour obturer ou pour régler la pression ou le débit d'écoulement dans un tube.

Le dispositif d'obturation 2 comprend un manchon tubulaire gonflable 3 présentant un axe d'extension A. Le manchon tubulaire gonflable 3 est en matériau étanche, par exemple en élastomère, et présente avantageusement une section globalement circulaire.

Le manchon tubulaire gonflable 3 est flexible et est déformable radialement entre une configuration de repos (voir la figure 1) dans laquelle le manchon tubulaire gonflable 3 présente un premier diamètre externe maximal D1, et une configuration gonflée (voir la figure 2) dans laquelle le manchon tubulaire gonflable 3 présente un deuxième diamètre externe maximal D2 supérieur au premier diamètre externe maximal D1.

Le dispositif d'obturation 2 comprend également un premier élément de support 4 et un deuxième élément de support 5 sur lesquels sont fixées de manière étanche respectivement une première portion d'extrémité et une deuxième portion d'extrémité du manchon tubulaire gonflable 3. Le manchon tubulaire gonflable 3 et les premier et deuxième éléments de support 4, 5 délimitent une chambre interne 6.

Le dispositif d'obturation 2 comprend en outre une entrée de fluide 7 prévue sur le premier élément de support 4. L'entrée de fluide 7 débouche dans la chambre interne 6, et est destinée à être reliée à un conduit d'alimentation raccordé à une source de fluide de gonflage. L'entrée de fluide 7 est plus particulièrement configurée pour alimenter, en conditions d'utilisation, la chambre interne 6 en fluide de gonflage de manière à déformer radialement le manchon tubulaire gonflable 3 vers sa configuration gonflée.

Le dispositif d'obturation 2 comprend de plus une enveloppe de renfort interne 8 disposée autour du manchon tubulaire gonflable 3 et s'étendant coaxialement au manchon tubulaire gonflable 3. L'enveloppe de renfort interne 8 comporte une première portion d'extrémité fixée sur le premier élément de support 4, et une deuxième portion d'extrémité fixée sur le deuxième élément de support 5.

Selon le mode de réalisation représenté sur les figures, l'enveloppe de renfort interne 8 comprend :
- une première couche de renforcement interne 9 tubulaire et composée de fils de renforcement 10 enroulés en hélice autour de la surface extérieure du manchon tubulaire gonflable 3 et autour de l'axe d'extension A du manchon tubulaire gonflable selon un premier sens d'enroulement,
- une deuxième couche de renforcement interne 11 tubulaire et composée de fils de renforcement 12 enroulés en hélice autour de la première couche de renforcement interne 9 et autour de l'axe d'extension A du manchon tubulaire gonflable 3 selon un deuxième sens d'enroulement inversé par rapport au premier sens d'enroulement,
- une troisième couche de renforcement interne 13 tubulaire et composée de fils de renforcement 14 enroulés en hélice autour de la deuxième couche de renforcement interne 11 et autour de l'axe d'extension A du manchon tubulaire gonflable 3 selon le premier sens d'enroulement, et
- une quatrième couche de renforcement interne 15 tubulaire et composée de fils de renforcement 16 enroulés en hélice autour de la troisième couche de renforcement interne 13 et autour l'axe d'extension A du manchon tubulaire gonflable 3 selon le deuxième sens d'enroulement.

Selon une variante de réalisation de l'invention, l'enveloppe de renfort interne 8 pourrait cependant ne comprendre que les première et deuxième couches de renforcement 9, 11.

Chaque fil de renforcement 10, 12, 14, 16 appartenant à l'enveloppe de renfort interne 8 comprend avantageusement une première extrémité fixée sur le premier élément de support 4, et une deuxième extrémité fixée sur le deuxième élément de support 5. A cet effet, chacun des premier et deuxième éléments de support 4, 5 peut être pourvu par exemple d'une pluralité d'éléments d'ancrage sur lesquelles peuvent être fixées les première et deuxième extrémités des fils de renforcement 10, 12, 14, 16.

Selon un mode de réalisation de l'invention, chaque fil de renforcement 10, 12, 14, 16 appartenant à l'enveloppe de renfort interne 8 s'étend selon un angle d'hélice compris entre 5 et 20°, et de préférence inférieur à 15°, par rapport à l'axe d'extension A du manchon tubulaire gonflable 3 en configuration de repos. Les fils de renforcement 10, 12, 14, 16 appartenant à l'enveloppe de renfort interne 8 s'étendent avantageusement selon un angle d'hélice sensiblement identique. Néanmoins, les fils de renforcement 10, 12, 14, 16 appartenant à l'enveloppe de renfort interne 8 pourraient également s'étendre selon des angles d'hélice différents.

Selon un mode de réalisation de l'invention, chaque fil de renforcement 10, 12, 14, 16 appartenant à l'enveloppe de renfort interne 8 s'étend chacun sur moins d'une spire d'hélice, c'est-à-dire sur une portion de spire.

L'enveloppe de renfort interne 8 peut être formée par des fils de renforcement en UHMWPE, par des fils de renforcement en polymère à cristaux liquides, ou par un mélange de fils de renforcement en UHMWPE et de fils de renforcement en polymère à cristaux liquides. L'enveloppe de renfort interne 8 peut par exemple être formée par un mélange :
- de 10 à 90%, avantageusement de 20 à 80%, de préférence de 40 à 60 %, et par exemple d'environ 50 %, de fils de renforcement en UHMWPE, et
- de 90 à 10 %, de préférence de 80 à 20 %, avantageusement de 60 à 40 %, et par exemple d'environ 50 %, de fils de renforcement en polymère à cristaux liquides, le pourcentage étant exprimé en nombre de fils de renforcement par rapport au nombre total de fils de renforcement formant l'enveloppe de renfort interne 8.

Avantageusement, chacune des première, deuxième, troisième et quatrième couches de renforcement internes 9, 11, 13, 15 est formée par un mélange :
- de 10 à 90%, avantageusement de 20 à 80%, de préférence de 40 à 60 %, et par exemple d'environ 50 %, de fils de renforcement en UHMWPE, et
- de 90 à 10 %, de préférence de 80 à 20 %, avantageusement de 60 à 40 %, et par exemple d'environ 50 %, de fils de renforcement en polymère à cristaux liquides, le pourcentage étant exprimé en nombre de fils de renforcement par rapport au nombre total de fils de renforcement formant ladite couche de renforcement interne.

Le dispositif d'obturation 2 comprend en outre une enveloppe de renfort intermédiaire 17 disposée autour de l'enveloppe de renfort interne 8, et s'étendant coaxialement au manchon tubulaire gonflable 3. L'enveloppe de renfort intermédiaire 17 comporte une première portion d'extrémité fixée sur le premier élément de support 4, et une deuxième portion d'extrémité fixée sur le deuxième élément de support 5.

Selon le mode de réalisation représenté sur les figures, l'enveloppe de renfort intermédiaire 17 comprend une pluralité de couches de renforcement intermédiaires 18 tubulaires et coaxiales, et par exemple quatre couches de renforcement intermédiaires 18. Chaque couche de renforcement intermédiaire 18 est composée de fils de renforcement 19 s'étendant parallèlement à l'axe d'extension A du manchon tubulaire gonflable 3.

Selon une variante de réalisation de l'invention, l'enveloppe de renfort intermédiaire 17 pourrait cependant ne comprendre qu'une seule couche de renforcement intermédiaire 18, deux, trois ou plus de quatre couches de renforcement intermédiaires 18.

Chaque fil de renforcement 19 appartenant à l'enveloppe de renfort intermédiaire 17 comprend avantageusement une première extrémité fixée sur le premier élément de support 4, et une deuxième extrémité fixée sur le deuxième élément de support 5.

L'enveloppe de renfort intermédiaire 17 peut être formée par des fils de renforcement 19 en UHMWPE, par des fils de renforcement 19 en polymère à cristaux liquides, ou par un mélange de fils de renforcement 19 en UHMWPE et de fils de renforcement 19 en polymère à cristaux liquides. L'enveloppe de renfort intermédiaire 17 peut par exemple être formée par un mélange :
- de 10 à 90%, avantageusement de 20 à 80%, de préférence de 40 à 60 %, et par exemple d'environ 50 %, de fils de renforcement en UHMWPE, et
- de 90 à 10 %, de préférence de 80 à 20 %, avantageusement de 60 à 40 %, et par exemple d'environ 50 %, de fils de renforcement en polymère à cristaux liquides, le pourcentage étant exprimé en nombre de fils de renforcement par rapport au nombre total de fils de renforcement formant l'enveloppe de renfort intermédiaire 17.

Avantageusement, chaque couche de renforcement intermédiaire 18 est formée par un mélange :
- de 10 à 90%, avantageusement de 20 à 80%, de préférence de 40 à 60 %, et par exemple d'environ 50 %, de fils de renforcement en UHMWPE, et
- de 90 à 10 %, de préférence de 80 à 20 %, avantageusement de 60 à 40 %, et par exemple d'environ 50 %, de fils de renforcement en polymère à cristaux liquides, le pourcentage étant exprimé en nombre de fils de renforcement par rapport au nombre total de fils de renforcement formant ladite couche de renforcement intermédiaire.

Le dispositif d'obturation 2 comprend en outre une enveloppe de renfort externe 21 disposée autour de l'enveloppe de renfort intermédiaire 17 et s'étendant coaxialement au manchon tubulaire gonflable 3. L'enveloppe de renfort externe 21 comporte une première portion d'extrémité fixée sur le premier élément de support 4, et une deuxième portion d'extrémité fixée sur le deuxième élément de support 5.

Selon le mode de réalisation représenté sur les figures, l'enveloppe de renfort externe 21 comprend une pluralité de couches de renforcement externes 22 tubulaires et coaxiales, et par exemple deux couches de renforcement externes 22. Chaque couche de renforcement externe 22 est composée de fils de renforcement 23 s'étendant parallèlement à l'axe d'extension A du manchon tubulaire gonflable 3. Avantageusement, les fils de renforcement 23 appartenant à l'enveloppe de renfort externe 21 sont formés en UHMWPE.

Selon une variante de réalisation de l'invention, l'enveloppe de renfort externe 21 pourrait cependant ne comprendre qu'une seule couche de renforcement externe 22, ou plus de deux couches de renforcement externes 22.

Chaque fil de renforcement 23 appartenant à l'enveloppe de renfort externe 212 comprend avantageusement une première extrémité fixée sur le premier élément de support 4, et une deuxième extrémité fixée sur le deuxième élément de support 5.

Selon un mode de réalisation de l'invention, chaque fil de renforcement en polymère à cristaux liquides appartenant à l'enveloppe de renfort interne 8, et à l'enveloppe de renfort intermédiaire 17 présente :
- une masse linéique comprise entre 25 et 3750 Denier, c'est-à-dire entre 25 et 3750 g/9000 m ;
- une masse linéique comprise entre 27 et 4160 Décitex, c'est-à-dire entre 27 et 4160 g/10000 m ;
- un module d'élasticité supérieur à 525 g/d (grammes par denier), et par exemple supérieur à 600 g/d ; et
- une élongation à la rupture maximale inférieure ou égale à 10 %, de préférence inférieure ou égale à 5 %, et par exemple comprise entre 2 et 3,3 %.

Selon un mode de réalisation de l'invention, chaque fil de renforcement en UHMWPE appartenant à l'enveloppe de renfort interne 8, à l'enveloppe de renfort intermédiaire 17 et à l'enveloppe de renfort externe 21 présente :
- une masse linéique comprise entre 130 et 4800 Denier, c'est-à-dire entre 130 et 4800 g/9000 m ;
- une masse linéique comprise entre 144 et 5300 Décitex, c'est-à-dire entre 144 et 5300 10⁻⁷ Kg/m ou g/10000 m ;
- un module d'élasticité supérieur à 720 g/d (grammes par denier), et par exemple supérieur à 1350 g/d ; et
- une élongation à la rupture maximale inférieure ou égale à 10%, de préférence inférieure ou égale à 5 %, et par exemple comprise entre 2,7 et 3,5 %.

Selon un exemple de réalisation préféré de l'invention, le dispositif d'obturation 2 comporte :
- une enveloppe de renfort interne 8 comportant quatre couches de renforcement internes 9, 11, 13, 15 formée chacune par un mélange de 50 % de fils de renforcement en DYNEEMA 1760 dtex, et de 50 % de fils de renforcement en VECTRAN 1500 Denier, le pourcentage étant exprimé en nombre de fils de renforcement par rapport au nombre total de fils de renforcement formant ladite couche de renforcement interne 8,
- une enveloppe de renfort intermédiaire 17 comportant quatre couches de renforcement intermédiaire 18 formée chacune par un mélange de 50 % de fils de renforcement en DYNEEMA 1760 dtex, et de 50% de fils de renforcement en VECTRAN 1500 Denier, le pourcentage étant exprimé en nombre de fils de renforcement par rapport au nombre total de fils de renforcement formant ladite couche de renforcement intermédiaire 17, et
- une enveloppe de renfort externe 21 comportant deux couches de renforcement externes 22 formées chacune par des fils de renforcement 23 en DYNEEMA 1760 dtex.

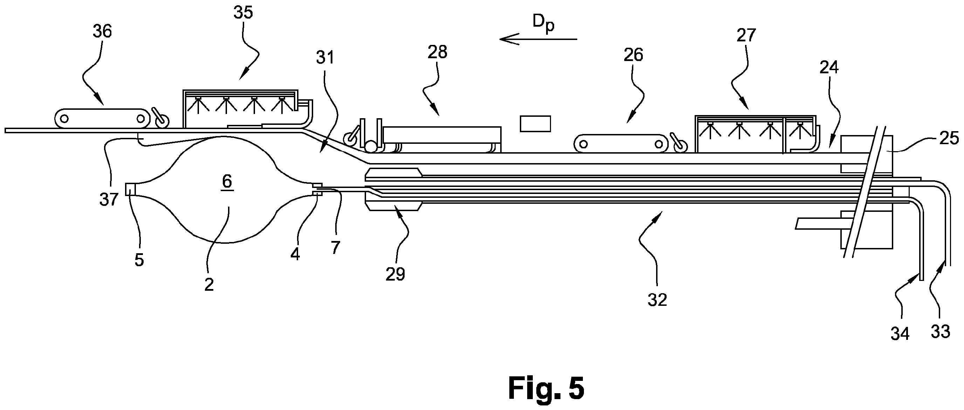

Un procédé de fabrication d'un tube en matière plastique bi-orienté à l'aide du dispositif d'obturation 2 va maintenant être décrit en référence à la figure 5. Un tel procédé comprend les étant suivantes consistant à :
- extruder un tube 24 en matière plastique à l'aide d'une extrudeuse 25 pourvue d'une filière de calibrage,
- déplacer le tube extrudé 24 longitudinalement selon une direction de déplacement Dp à l'aide d'un premier dispositif de tirage 26,
- refroidir le tube extrudé 24 à l'aide d'un premier dispositif de refroidissement 27,
- conditionner en température le tube extrudé 24 à l'aide d'un dispositif de conditionnement en température 28,
- disposer le dispositif d'obturation 2 et un élément d'obturation 29 à l'intérieur du tube extrudé 24 et à distance l'un de l'autre de manière à définir une zone de dilatation 31, le dispositif d'obturation 2 étant disposé en aval de l'élément d'obturation 29 par rapport à la direction de déplacement Dp du tube extrudé 24, le dispositif d'obturation 2 et l'élément d'obturation 29 étant maintenu en position par l'intermédiaire d'un tube de service 32 relié à un dispositif de retenue (non représenté sur les figures),
- introduire un fluide de dilatation dans la zone de dilatation 31 par l'intermédiaire d'un conduit d'alimentation 33 relié à une source de fluide de dilatation (non représentée sur les figures) et s'étendant en partie dans le tube de service 32,
- introduire un fluide de gonflage dans la chambre interne 6 du dispositif d'obturation 2 par l'intermédiaire d'un conduit d'alimentation 34 relié d'une part à l'entrée de fluide 7 et d'autre part à une source de fluide de gonflage (non représentée sur les figures), de manière à déformer radialement le manchon tubulaire gonflable 3 dans sa configuration gonflée,
- dilater diamétralement le tube extrudé 24 par l'intermédiaire du fluide de dilatation retenu au moins en partie dans la zone de dilatation 31, et
- refroidir le tube dilaté diamétralement à l'aide d'un deuxième dispositif de refroidissement 35.

Le procédé de fabrication comprend en outre une étape consistant à étirer axialement le tube extrudé 24, une telle étape pouvant être réalisée avant ou après l'étape de dilatation. Une telle étape d'étirage axial peut être réalisé à l'aide d'un deuxième dispositif de tirage 36 disposé en aval de la zone de dilatation 31 et présentant une vitesse au moins égale, voire plus élevée que celle du premier dispositif de tirage 26.

Selon un mode de mise en œuvre du procédé de fabrication, ce dernier comprend en outre une étape consistant à maintenir la pression dans la zone de dilation 31 dans une plage de pression prédéterminée. Un tel maintien en pression est avantageusement réalisé en assurant un débit de fuite 37 entre le tube extrudé 24 et le dispositif d'obturation 2.

Comme il va de soi, l'invention ne se limite pas à la seule forme d'exécution de ce dispositif d'obturation 2, décrite ci-dessus à titre d'exemple, elle en embrasse au contraire toutes les variantes de réalisation comprises par les revendications.

## Revendications

1. Dispositif d'obturation (2) adapté à obturer et régler la pression ou le débit d'écoulement dans un tube (24), pour la fabrication par extrusion de ce tube, comprenant :
- un manchon tubulaire gonflable (3) présentant un axe d'extension (A) et délimitant au moins partiellement une chambre interne (6), le manchon tubulaire gonflable (3) étant flexible et déformable radialement entre une configuration de repos dans laquelle le manchon tubulaire gonflable (3) présente un premier diamètre externe maximal (D1) et une configuration gonflée dans laquelle le manchon tubulaire gonflable (3) présente un deuxième diamètre externe maximal (D2) supérieur au premier diamètre externe maximal (D1),
- une entrée de fluide (7) reliée fluidiquement à la chambre interne (6) et destinée à être reliée à une source de fluide de gonflage, l'entrée de fluide (7) étant configurée pour alimenter, en conditions d'utilisation, la chambre interne (6) en fluide de gonflage de manière à déformer radialement le manchon tubulaire gonflable (3) vers sa configuration gonflée,
- une enveloppe de renfort interne (8) disposée autour du manchon tubulaire gonflable (3), l'enveloppe de renfort interne (8) comprenant au moins :
- une première couche de renforcement interne (9) tubulaire et composée de fils de renforcement (10) enroulés en hélice autour de la surface extérieure du manchon tubulaire gonflable (3) et autour de l'axe d'extension (A) du manchon tubulaire gonflable selon un premier sens d'enroulement, et
- une deuxième couche de renforcement interne (11) tubulaire et composée de fils de renforcement (12) enroulés en hélice autour de la première couche de renforcement interne (9) et autour de l'axe d'extension (A) du manchon tubulaire gonflable (3) selon un deuxième sens d'enroulement inversé par rapport au premier sens d'enroulement; **caractérisé en ce que** le dispositif d'obturation (2) comprend une enveloppe de renfort externe (21) disposée autour de l'enveloppe de renfort interne (8), l'enveloppe de renfort externe (21) comprenant au moins une couche de renforcement externe (22) tubulaire et composée de fils de renforcement (23), et **en ce que** l'enveloppe de renfort interne (8) est formée par des fils de renforcement en UHMWPE et des fils de renforcement en polymère à cristaux liquides, et **en ce que** la couche de renforcement externe (22) est composée de fils de renforcement (23) s'étendant sensiblement parallèlement à l'axe d'extension (A) du manchon tubulaire gonflable (3).

2. Dispositif d'obturation selon la revendication 1, dans lequel l'enveloppe de renfort interne (8) comprend en outre au moins :
- une troisième couche de renforcement interne (13) tubulaire et composée de fils de renforcement (14) enroulés en hélice autour de la deuxième couche de renforcement interne (11) et autour de l'axe d'extension (A) du manchon tubulaire gonflable (3) selon le premier sens d'enroulement, et
- une quatrième couche de renforcement interne (15) tubulaire et composée de fils de renforcement (16) enroulés en hélice autour de la troisième couche de renforcement interne (13) et autour l'axe d'extension (A) du manchon tubulaire gonflable (3) selon le deuxième sens d'enroulement.

3. Dispositif d'obturation selon l'une quelconque des revendications 1 à 2, dans lequel l'enveloppe de renfort externe (21) comprend une pluralité de couches de renforcement externes (26) s'étendant sensiblement coaxialement les unes par rapport aux autres.

4. Dispositif d'obturation selon l'une quelconque des revendications 1 à 3, dans lequel l'enveloppe de renfort interne (8) est formée par un mélange de 10 à 90 % de fils de renforcement en UHMWPE, et de 90 à 10 % de fils de renforcement en polymère à cristaux liquides, le pourcentage étant exprimé en nombre de fils de renforcement par rapport au nombre total de fils de renforcement formant l'enveloppe de renfort interne (8).

5. Dispositif d'obturation selon l'une quelconque des revendications 1 à 4, lequel comprend en outre une enveloppe de renfort intermédiaire (17) disposée autour de l'enveloppe de renfort interne (8) et entre l'enveloppe de renfort interne (8) et l'enveloppe de renfort externe (21), l'enveloppe de renfort intermédiaire (17) s'étendant sensiblement coaxialement au manchon tubulaire gonflable (3), l'enveloppe de renfort intermédiaire (17) comprenant au moins une couche de renforcement intermédiaire (18) tubulaire et composée de fils de renforcement (19) s'étendant sensiblement parallèlement à l'axe d'extension (A) du manchon tubulaire gonflable (3).

6. Dispositif d'obturation selon la revendication 5, dans lequel l'enveloppe de renfort intermédiaire (17) comprend une pluralité de couches de renforcement intermédiaires (18) s'étendant sensiblement coaxialement les unes par rapport aux autres.

7. Dispositif d'obturation selon la revendication 5 ou 6, dans lequel l'enveloppe de renfort intermédiaire (17) est formée, au moins en partie, par des fils de renforcement en UHMWPE, et/ou des fils de renforcement en polymère à cristaux liquides, et/ou des fils de renforcement en polybenzoxal, et/ou des fils de renforcement en polytétrafluoroéthylène.

8. Dispositif d'obturation selon l'une quelconque des revendications 5 à 7, dans lequel l'enveloppe de renfort intermédiaire (17) est formée par des fils de renforcement en UHMWPE et/ou des fils de renforcement en polymère à cristaux liquides.

9. Dispositif d'obturation selon l'une quelconque des revendications 5 à 8, dans lequel l'enveloppe de renfort intermédiaire (17) est formée par un mélange de 10 à 90% de fils de renforcement en UHMWPE, et de 90 à 10% de fils de renforcement en polymère à cristaux liquides, le pourcentage étant exprimé en nombre de fils de renforcement par rapport au nombre total de fils de renforcement formant l'enveloppe de renfort intermédiaire (17).

10. Dispositif d'obturation selon l'une quelconque des revendications 1 à 9, dans lequel l'enveloppe de renfort externe (21) est formée, au moins en partie, par des fils de renforcement en UHMWPE, et/ou des fils de renforcement en polymère à cristaux liquides, et/ou des fils de renforcement en polybenzoxal, et/ou des fils de renforcement en polytétrafluoroéthylène.

11. Dispositif d'obturation selon l'une quelconque des revendications 1 à 9, dans lequel les fils de renforcement appartenant à l'enveloppe de renfort externe (21) sont formés en UHMWPE.

12. Procédé de fabrication d'un tube en matière plastique, comprenant les étapes consistant à :
- extruder un tube (24) en matière plastique,
- déplacer le tube extrudé (24) longitudinalement selon une direction de déplacement (Dp),
- disposer un dispositif d'obturation (2) selon l'une quelconque des revendications 1 à 11 et un élément d'obturation (29) à l'intérieur du tube extrudé (24) et à distance l'un de l'autre de manière à définir une zone de dilatation (31), le dispositif d'obturation (2) étant disposé en aval de l'élément d'obturation (29) par rapport à la direction de déplacement (Dp) du tube extrudé (24),
- introduire un fluide de dilatation dans la zone de dilatation (31),
- introduire un fluide de gonflage dans la chambre interne (6) du dispositif d'obturation (2) de manière à déformer radialement le manchon tubulaire gonflable (3) dans sa configuration gonflée,
- dilater diamétralement le tube extrudé (24) par l'intermédiaire du fluide de dilatation retenu au moins en partie dans la zone de dilatation (31), et
- refroidir le tube dilaté diamétralement.

13. Utilisation d'un dispositif d'obturation (2) selon l'une quelconque des revendications 1 à 11 pour la fabrication d'un tube en matière plastique.

## Patentansprüche

1. Abdichtungsvorrichtung (2), die zum Abdichten und Steuern des Drucks oder des Durchflusses in einem Rohr (24) ausgebildet ist, für die Herstellung dieses Rohres durch Extrusion, umfassend:
- eine aufblasbare Rohrmuffe (3) mit einer Erstreckungsachse (A), die eine innere Kammer (6) zumindest teilweise begrenzt, wobei die aufblasbare Rohrmuffe (3) flexibel ist und radial verformbar ist zwischen einer Ruhekonfiguration, in der die aufblasbare Rohrmuffe (3) einen ersten maximalen Außendurchmesser (D1) aufweist, und einer aufgeblasenen Konfiguration, in der die aufblasbare Rohrmuffe (3) einen zweiten maximalen Außendurchmesser (D2) aufweist, der größer als der erste maximale Außendurchmesser (D1) ist,
- einen Fluideinlass (7), der mit der inneren Kammer (6) fluidisch verbunden ist und dazu bestimmt ist, an eine Quelle des Aufblasfluids angeschlossen zu werden, wobei der Fluideinlass (7) so konfiguriert ist, dass die innere Kammer (6) unter Betriebsbedingungen mit dem Aufblasfluid versorgt wird, so dass die aufblasbare Rohrmuffe (3) radial in ihre aufgeblasene Konfiguration verformt wird;
- eine innere verstärkende Hülse (8), die um die aufblasbare Rohrmuffe (3) angeordnet ist, wobei die innere verstärkende Hülse (8) mindestens Folgendes umfasst:
- eine erste innere Verstärkungsschicht (9), die rohrförmig ist und aus Verstärkungsfäden (10) besteht, die in einer ersten Wickelrichtung um die Außenfläche der aufblasbaren Rohrmuffe (3) und um die Erstreckungsachse (A) der aufblasbaren Rohrmuffe schraubenförmig gewickelt sind, und
- eine zweite innere Verstärkungsschicht (11), die rohrförmig ist und aus Verstärkungsfäden (12) besteht, die in einer zweiten Wickelrichtung um die erste innere Verstärkungsschicht (9) und um die Erstreckungsachse (A) der aufblasbaren Rohrmuffe schraubenförmig gewickelt sind, wobei die zweite Wickelrichtung entgegengesetzt zu der ersten Wickelrichtung ist;
**dadurch gekennzeichnet, dass** die Abdichtungsvorrichtung (2) eine um die innere verstärkende Hülse (8) angeordnete äußere verstärkende Hülse (21) umfasst, wobei die äußere verstärkende Hülse (21) mindestens eine äußere Verstärkungsschicht (22) umfasst, die rohrförmig ist und aus Verstärkungsfäden (23) besteht,
dadurch, dass die innere verstärkende Hülse (8) aus UHMWPE-Verstärkungsfäden und flüssigkristallinen Polymerverstärkungsfäden gebildet ist, und dadurch, dass die äußere Verstärkungsschicht (22) aus Verstärkungsfäden (23) besteht, die sich im Wesentlichen parallel zur Erstreckungsachse (A) der aufblasbaren Rohrmuffe (3) erstrecken.

2. Abdichtungsvorrichtung nach Anspruch 1, wobei die innere verstärkende Hülse (8) ferner mindestens Folgendes umfasst:
- eine dritte innere Verstärkungsschicht (13), die rohrförmig ist und aus Verstärkungsfäden (14) besteht, die in der ersten Wickelrichtung um die zweite innere Verstärkungsschicht (11) und um die Erstreckungsachse (A) der aufblasbaren Rohrmuffe (3) schraubenförmig gewickelt sind, und
- eine vierte innere Verstärkungsschicht (15), die rohrförmig ist und aus Verstärkungsfäden (16) besteht, die in der zweiten Wickelrichtung um die dritte innere Verstärkungsschicht (13) und um die Erstreckungsachse (A) der aufblasbaren Rohrmuffe (3) schraubenförmig gewickelt sind.

3. Abdichtungsvorrichtung nach einem der Ansprüche 1 und 2, wobei die äußere verstärkende Hülse (21) eine Vielzahl von äußeren Verstärkungsschichten (26) umfasst, die sich im Wesentlichen koaxial zueinander erstrecken.

4. Abdichtungsvorrichtung nach einem der Ansprüche 1 bis 3, wobei die innere verstärkende Hülle (8) aus einer Mischung von 10 bis 90 % UHMWPE-Verstärkungsfäden und 90 bis 10 % flüssigkristallinen Polymerverstärkungsfäden gebildet ist; wobei der Prozentsatz als Anzahl der Verstärkungsfäden im Vergleich zur Gesamtzahl der Verstärkungsfäden, die die innere verstärkende Hülse (8) bilden, ausgedrückt wird.

5. Abdichtungsvorrichtung nach einem der Ansprüche 1 bis 4, die ferner eine zwischengeschaltete verstärkende Hülse (17) umfasst, die um die innere verstärkende Hülse (8) und zwischen der inneren verstärkenden Hülse (8) und der äußeren verstärkenden Hülse (21) angeordnet ist, wobei die zwischengeschaltete verstärkende Hülse (17) sich im Wesentlichen koaxial zu der aufblasbaren Rohrmuffe (3) erstreckt, und wobei die zwischengeschaltete verstärkende Hülse (17) mindestens eine Zwischenverstärkungsschicht (18) umfasst, die rohrförmig ist und aus Verstärkungsfäden (19) besteht, die sich im Wesentlichen parallel zur Erstreckungsachse (A) der aufblasbaren Rohrmuffe (3) erstrecken.

6. Abdichtungsvorrichtung nach Anspruch 5, wobei die zwischengeschaltete verstärkende Hülse (17) eine Vielzahl von zwischengeschalteten Verstärkungsschichten (18) umfasst, die sich im Wesentlichen koaxial zueinander erstrecken.

7. Abdichtungsvorrichtung nach Anspruch 5 oder 6, wobei die zwischengeschaltete verstärkende Hülse (17) zumindest teilweise aus UHMWPE-Verstärkungsfäden und/oder flüssigkristallinen Polymerverstärkungsfäden und/oder Polybenzoxal-Verstärkungsfäden und/oder Polytetrafluorethylen-Verstärkungsfäden gebildet ist.

8. Abdichtungsvorrichtung nach einem der Ansprüche 5 bis 7, wobei die zwischengeschaltete verstärkende Hülse (17) aus UHMWPE-Verstärkungsfäden und/oder flüssigkristallinen Polymerverstärkungsfäden gebildet ist.

9. Abdichtungsvorrichtung nach einem der Ansprüche 5 bis 8, wobei die Zwischenverstärkungshülse (17) aus einer Mischung von 10 bis 90 % UHMWPE-Verstärkungsfäden und 90 bis 10 % flüssigkristallinen Polymerverstärkungsfäden gebildet ist, wobei der Prozentsatz als Anzahl der Verstärkungsfäden im Vergleich zur Gesamtzahl der Verstärkungsfäden, die die zwischengeschaltete verstärkende Hülse (17) bilden, ausgedrückt wird.

10. Abdichtungsvorrichtung nach einem der Ansprüche 1 bis 9, wobei die äußere verstärkende Hülse (21) zumindest teilweise aus UHMWPE-Verstärkungsfäden und/oder flüssigkristallinen Polymerverstärkungsfäden und/oder Polybenzoxal-Verstärkungsfäden und/oder Polytetrafluorethylen-Verstärkungsfäden gebildet ist.

11. Abdichtungsvorrichtung nach einem der Ansprüche 1 bis 9, wobei die Verstärkungsfäden der äußeren verstärkenden Hülse (21) aus UHMWPE gebildet sind.

12. Verfahren zur Herstellung eines Kunststoffrohrs, wobei das Verfahren folgende Schritte umfasst:
- Extrudieren eines Kunststoffrohrs (24),
- Längsverschieben des extrudierten Rohrs (24) in eine Verschiebungsrichtung (DP),
- Anordnen einer Abdichtungsvorrichtung (2) nach einem der Ansprüche 1 bis 11 und eines Abdichtungselements (29) im Inneren des extrudierten Rohrs (24) und so voneinander beabstandet, dass ein Ausdehnungsbereich (31) definiert wird, wobei die Abdichtungsvorrichtung (2) in Bezug auf die Verschiebungsrichtung (DP) des extrudierten Rohrs (24) hinter dem Abdichtungselement (29) angeordnet ist;
- Einführen eines Ausdehnungsfluids in den Ausdehnungsbereich (31),
- Einführen eines Aufblasfluids in die innere Kammer (6) der Abdichtungsvorrichtung (2), so dass die aufblasbare Rohrmuffe (3) radial in ihre aufgeblasene Konfiguration verformt wird,
- Ausdehnen des extrudierten Rohrs (24) diametral mit Hilfe des Ausdehnungsfluids, das zumindest teilweise im Ausdehnungsbereich (31) zurückgehalten wird, und
- Abkühlen des diametral ausgedehnten Rohrs.

13. Verwendung einer Abdichtungsvorrichtung (2) nach einem der Ansprüche 1 bis 11 für die Herstellung eines Kunststoffrohrs.

## Claims

1. A sealing device (2) adapted to seal and adjust the pressure or flow rate in a tube (24), for the manufacture by extrusion of this tube, comprising:
- an inflatable tubular sleeve (3) having an axis of extension (A) and delimiting at least partially an internal chamber (6), the inflatable tubular sleeve (3) being flexible and radially deformable between a rest configuration in which the inflatable tubular sleeve (3) has a first maximum external diameter (D1) and an inflated configuration in which the inflatable tubular sleeve (3) has a second maximum external diameter (D2) greater than the first maximum external diameter (D1),
- a fluid inlet (7) fluidly connected to the internal chamber (6) and to be connected to an inflation fluid source, the fluid inlet (7) being configured to supply, in use, the internal chamber (6) with inflation fluid so as to radially deform the inflatable tubular sleeve (3) into its inflated configuration,
- an internal reinforcement casing (8) disposed around the inflatable tubular sleeve (3), the internal reinforcement casing (8) comprising at least:
- a first internal reinforcing layer (9) which is tubular and consists of reinforcing threads (10) wound helically around the outer surface of the inflatable tubular sleeve (3) and around the axis of extension (A) of the inflatable tubular sleeve in a first winding direction, and
- a second internal reinforcing layer (11) which is tubular and consists of reinforcing threads (12) wound helically around the first internal reinforcing layer (9) and around the axis of extension (A) of the inflatable tubular sleeve (3) in a second winding direction opposite to the first winding direction ;
**characterised in that** the sealing device (2) comprises an external reinforcement casing (21) disposed around the internal reinforcement casing (8), the external reinforcement casing (21) comprising at least one external reinforcing layer (22) which is tubular and consists of reinforcing threads (23),
and **in that** the internal reinforcement casing (8) is formed of reinforcing threads made of UHMWPE and reinforcing threads made of liquid crystal polymer, and **in that** the external reinforcing layer (22) consists of reinforcing threads (23) which extend substantially parallel to the axis of extension (A) of the inflatable tubular sleeve (3).

2. The sealing device according to claim 1, wherein the internal reinforcement casing (8) further comprises at least:
- a third internal reinforcing layer (13) which is tubular and consists of reinforcing threads (14) wound helically around the second internal reinforcing layer (11) and around the axis of extension (A) of the inflatable tubular sleeve (3) in the first winding direction, and
- a fourth internal reinforcing layer (15) which is tubular and consists of reinforcing threads (16) wound helically around the third internal reinforcing layer (13) and around the axis of extension (A) of the inflatable tubular sleeve (3) in the second winding direction.

3. The sealing device according to any one of claims 1 and 2, wherein the external reinforcement casing (21) comprises a plurality of external reinforcing layers (26) extending substantially coaxially with each other.

4. The sealing device according to any one of claims 1 to 3, wherein the internal reinforcement casing (8) is formed of a mixture of 10 to 90% of reinforcing threads made of UHMWPE and 90 to 10% of reinforcing threads made of liquid crystal polymer, the percentage being expressed as the number of reinforcing threads relative to the total number of reinforcing threads forming the internal reinforcement casing (8).

5. The sealing device according to any one of claims 1 to 4, further comprising an intermediate reinforcement casing (17) disposed around the internal reinforcement casing (8) and between the internal reinforcement casing (8) and the external reinforcement casing (21), wherein the intermediate reinforcement casing (17) extends substantially coaxially with the inflatable tubular sleeve (3), and wherein the intermediate reinforcement casing (17) comprises at least one intermediate reinforcing layer (18) which is tubular and consists of reinforcing threads (19) extending substantially parallel to the axis of extension (A) of the inflatable tubular sleeve (3).

6. The sealing device according to claim 5, wherein the intermediate reinforcement casing (17) comprises a plurality of intermediate reinforcing layers (18) extending substantially coaxially with each other.

7. The sealing device according to claim 5 or 6, wherein the intermediate reinforcement casing (17) is formed, at least in part, of reinforcing threads made of UHMWPE, and/or reinforcing threads made of liquid crystal polymer, and/or reinforcing threads made of polybenzoxal, and/or reinforcing threads made of polytetrafluoroethylene.

8. The sealing device according to any one of claims 5 to 7, wherein the intermediate reinforcement casing (17) is formed of reinforcing threads made of UHMWPE and/or reinforcing threads made of liquid crystal polymer.

9. The sealing device according to any one of claims 5 to 8, wherein the intermediate reinforcement casing (17) is formed of a mixture of 10 to 90% of reinforcing threads made of UHMWPE and 90 to 10% of reinforcing threads made of liquid crystal polymer, the percentage being expressed as the number of reinforcing threads relative to the total number of reinforcing threads forming the intermediate reinforcement casing (17).

10. The sealing device according to any one of claims 1 to 9, wherein the external reinforcement casing (21) is formed, at least in part, of reinforcing threads made of UHMWPE, and/or reinforcing threads made of liquid crystal polymer, and/or reinforcing threads made of polybenzoxal, and/or reinforcing threads made of polytetrafluoroethylene.

11. The sealing device according to any one of claims 1 to 9, wherein the reinforcing threads belonging to the external reinforcement casing (21) are formed of UHMWPE.

12. A method for manufacturing a tube made of plastic material, comprising the steps of:
- extruding a tube (24) made of plastic material,
- longitudinally moving the extruded tube (24) along a motion direction (Dp),
- disposing a sealing device (2) according to any one of claims 1 to 11 and a sealing element (29) inside the extruded tube (24) and at a distance from each other so as to define an expansion area (31), the sealing device (2) being disposed downstream of the sealing element (29) relative to the motion direction (Dp) of the extruded tube (24),
- introducing an expansion fluid into the expansion area (31),
- introducing an inflation fluid into the internal chamber (6) of the sealing device (2) so as to radially deform the inflatable tubular sleeve (3) into its inflated configuration,
- diametrically expanding the extruded tube (24) using the expansion fluid retained at least partly in the expansion area (31), and
- cooling the diametrically expanded tube.

13. Use of a sealing device (2) according to any one of claims 1 to 11 for the manufacturing of a tube made of plastic material.
